(19) Europäisches Patentamt

European Patent Office

Office européen des brevets

(11) EP 0 575 221 B1

## (12) FASCICULE DE BREVET EUROPEEN

(45) Date de publication et mention de la délivrance du brevet:
**22.07.1998 Bulletin 1998/30**

(51) Int Cl.$^6$: **G01S 7/02**, G01S 13/60, G01F 23/28

(21) Numéro de dépôt: **93401450.7**

(22) Date de dépôt: **08.06.1993**

(54) **Procédé de discrimination d'obstacles à partir d'un radar, et applications**

Verfahren für Radargerät zum Eliminieren der Signale von Hindernissen und Anwendungen dafür

Method for eliminating the signals of obstacles by radar and its applications

(84) Etats contractants désignés:
**DE FR GB IT NL SE**

(30) Priorité: **19.06.1992 FR 9207480**

(43) Date de publication de la demande:
**22.12.1993 Bulletin 1993/51**

(73) Titulaire: **THOMSON-CSF
75008 Paris (FR)**

(72) Inventeurs:
• **Année, Gilbert
  F-92402 Courbevoie Cédex (FR)**
• **Cornic, Pascal
  F-92402 Courbevoie Cédex (FR)**
• **Garrec, Patrick
  F-92402 Courbevoie Cédex (FR)**

(74) Mandataire: **Benoit, Monique et al
THOMSON-CSF-S.C.P.I.,
13, Avenue du Président
Salvador Allende
94117 Arcueil Cédex (FR)**

(56) Documents cités:
EP-A- 42 730           EP-A- 371 346
WO-A-84/03942          DE-A- 3 210 400
DE-A- 4 028 603        US-A- 3 945 005
US-A- 4 107 678        US-A- 4 660 044

• PROCEEDINGS OF EUSIPCO -88 FOURTH EUROPEAN SIGNAL PROCESSING CONFERENCE vol. 2, 8 Septembre 1988, GRENOBLE, FRANCE pages 791 - 794 STAMMLER ET AL 'Radar Signal Processing for Traffic Flow Control'

**Description**

La présente invention concerne un procédé de discrimination d'obstacles à partir d'un radar, et ses différentes applications à la mesure du niveau d'un liquide dans une cuve, ou encore à l'élimination d'échos parasites provenant notamment du sol, pour des radars montés sur véhicules ou contrôlant le trafic de véhicules.

Le procédé proposé répond à différentes contraintes ou limitations rencontrées dans les domaines d'applications précités, dans lesquels il est nécessaire de faire des mesures précises, soit de distance, soit de fréquences Doppler pour calculer des vitesses. Or, la précision des mesures effectuées par radar dépend, d'une part, des caractéristiques propres au radar utilisé (forme d'onde, largeur du lobe principal d'émission, bande de fréquence utilisée, niveau des lobes secondaires...), et d'autre part, des différents obstacles environnants qui peuvent constituer des échos parasites pour le radar, et perturber ainsi les mesures.

Dans l'application particulière relative à la mesure du niveau d'un liquide contenu dans une cuve, par exemple une cuve de pétrolier, on cherche à faire une mesure de niveau aussi fine que possible de manière à déterminer, de façon fiable, la quantité totale de liquide contenu dans la cuve. Les solutions habituellement proposées consistent à utiliser un radar à ondes continues, du type FM/CW (c'est-à-dire onde continue modulée en fréquence) fonctionnant en bande X, le radar étant placé au-dessus de la cuve et visant verticalement la surface constituée par le liquide. Le récepteur du radar effectue alors l'analyse spectrale des signaux reçus après mélange avec le signal d'émission, suivant le principe connu du radar à corrélation. Un radar mettant en oeuvre une telle analyse spectrale est décrit par exemple dans la demande WO 84/03942. Les inconvénients de ces solutions sont nombreux : le faisceau du radar doit être dimensionné de façon à n'intercepter que la surface du liquide dans la cuve lorsque le niveau est au plus bas, sans éclairer les bords de la cuve, qui renvoient des échos parasites, ce qui impose un niveau de lobes secondaires très faible. D'autre part, la résolution en distance d'un radar à corrélation étant inversement proportionnelle à la bande de fréquence $\Delta F$ utilisée, cette dernière doit être suffisamment grande, typiquement de l'ordre de 1 GHz si l'on veut une précision de l'ordre du centimètre. Ceci conduit à des exigences importantes concernant la linéarité de l'émetteur-récepteur dans la bande de fréquence $\Delta F$ utilisé. Enfin, l'analyse spectrale effectuée peut nécessiter l'utilisation de FFT à 1024 points. Toutes ces exigences rendent le radar coûteux.

Dans les autres applications relatives aux radars montés sur véhicules pour mesurer, par exemple, leur vitesse de déplacement par effet Doppler, ou bien aux radars destinés à contrôler le trafic de véhicules, par exemple sur route, les mesures effectuées sont perturbées de manière gênante par les échos parasites provenant notamment du sol et reçus par les lobes secondaires. Ce problème est généralement résolu, de manière insuffisante, en imposant de fortes contraintes sur le niveau des lobes secondaires.

La présente invention a pour but de pallier les inconvénients et limitations précédentes en proposant un procédé de discrimination d'obstacles permettant de réduire les coûts du radar et d'accroître la précision des mesures, quelles que soient les mesures effectuées (distance, Doppler...).

Plus précisément, l'invention concerne un procédé de discrimination d'un obstacle parmi un nombre M d'obstacles, cet obstacle possédant une surface sensiblement plane, le procédé selon l'invention prévoyant une étape de calcul de la distance $d_A$ séparant le radar de la surface dans le cas où les obstacles autres que la surface constituent des obstacles parasites (cas de la mesure du niveau d'un liquide dans une cuve par exemple), la direction de visée du radar étant orthogonale à la surface, comme défini dans les revendications 1 et 2.

Dans les autres applications citées antérieurement, c'est l'obstacle plan constitué par la surface qui est gênant et le procédé selon l'invention prévoit alors une étape d'élimination des échos parasites provenant de cette surface, comme défini dans la revendication 3.

La présente invention a également pour objets d'une part un radar mettant en oeuvre le procédé selon les revendications 1 et 2 pour la mesure du niveau d'un liquide par rapport à un niveau de référence, tel que défini dans les revendications 4 à 6, et d'autre part, un radar cinémomètre Doppler et un radar de contrôle du trafic de véhicules mettant en oeuvre le procédé selon la revendication 3, tels que définis dans les revendications 7 et 8.

L'invention, ainsi que ses avantages, seront mieux compris au vu de la description suivante, faite en référence aux figures annexées.

- La figure 1 illustre le procédé selon l'invention, appliqué à la mesure du niveau d'un liquide dans une cuve ;
- La figure 2 est un exemple de réalisation d'un radar pour la mise en oeuvre de l'application précédente.
- La figure 3 montre une allure possible de la tension émise par le générateur de la figure 2 en fonction du temps.
- La figure 4 illustre une application du procédé de discrimination à l'élimination d'échos parasites reçus par un radar cinémomètre Doppler.

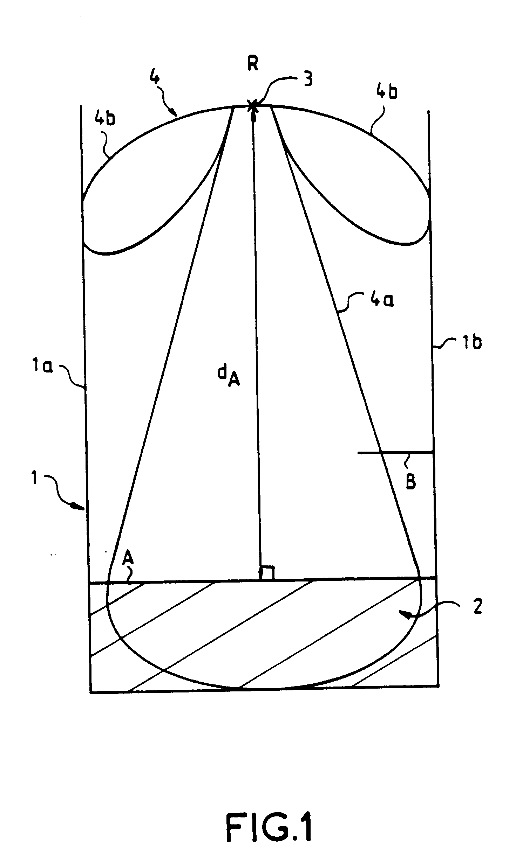

Afin de mieux comprendre le principe du procédé selon l'invention, plaçons-nous dans le cadre non limitatif de la figure 1 qui correspond à l'application du procédé selon l'invention à la mesure du niveau d'un liquide dans une cuve :

Sur cette figure 1, on a représenté une cuve 1 contenant un liquide 2. La surface du liquide 2 constitue un obstacle de surface sensiblement plane que nous noterons A. La cuve comporte également, sur une de ses parois verticales 1a ou 1b, un second obstacle B situé au-dessus de l'obstacle A. Comme il est connu, la mesure du niveau de liquide s'effectue grâce à un radar 3 placé au-dessus de la cuve 1 au point R. Le radar 3 possède un diagramme d'émission 4 présentant un lobe principal 4a dont la direction de visée est normale à la surface de l'obstacle A, et des lobes secondaires 4b. L'obstacle B tel que représenté constitue un obstacle parasite très gênant pour la mesure de la distance $d_A$ séparant le radar 3 de l'obstacle A, puisqu'il intercepte le lobe principal 4a. Les parties des parois 1a et 1b interceptant les lobes secondaires 4b constituent également des obstacles parasites gênants. Dans le calcul que nous allons effectuer par la suite, nous considèrerons, pour simplifier, que l'on cherche à discriminer uniquement les obstacles A et B. Ce calcul montre qu'il est possible de discriminer ces deux obstacles A et B selon le procédé de l'invention, en émettant successivement, à partir du radar 3, au moins trois ondes sensiblement planes à trois pulsations $\omega_i$ légèrement différentes choisies dans une bande de fréquence $\Delta F$ relativement étroite, chaque onde à une pulsation $\omega_i$ donnée étant émise selon deux polarisations p et p' différentes, dont nous donnerons les caractéristiques par la suite.

Les signaux émis par le radar 3 selon l'invention sont de la forme :

$$\begin{cases} x_{ip}(t) = x_0\, e^{j\omega_i t} \quad \text{pour une pulsation } \omega_i \text{ selon} \\ \qquad\qquad\qquad\qquad \text{la polarisation } p \\ x_{ip'}(t) = x_0\, e^{j\omega_i t} \quad \text{pour une pulsation } \omega_i \text{ selon} \\ \qquad\qquad\qquad\qquad \text{la polarisation } p' \end{cases}$$

avec l'entier i variant de 1 à 3 et les pulsations $\omega_i$ préférentiellement telles que pour tout i variant de 1 à 3

$$\omega_{i+1} - \omega_i = \Delta\omega$$

L'étape de calcul de la distance $d_A$ selon l'invention consiste à effectuer tout d'abord une démodulation des signaux $r_{ip}(t)$ et $x_{ip'}(t)$ reçus par le radar en réponse respectivement aux signaux émis $x_{ip}(t)$ et $x_{ip'}(t)$ de façon à obtenir des signaux $Y_{ip}$ et $Y_{ip'}$ de la forme :

$$\begin{cases} Y_{ip} = A_{ip}\, x_0\, e^{j\omega_i \tau_A} + B_{ip}\, x_0\, e^{j\omega_i \tau_B} \\ \\ Y_{ip'} = A_{ip'}\, x_0\, e^{j\omega_i \tau_A} + B_{ip'}\, x_0\, e^{j\omega_i \tau_B} \end{cases} \qquad (1)$$

où :

$A_{ip}$ (respectivement $B_{ip}$) est le coefficient de réflexion d'une onde de pulsation $\omega_i$ et de polarisation p sur l'obstacle A (respectivement B)

$A_{ip'}$ (respectivement $B_{ip'}$) est le coefficient de réflexion d'une onde de pulsation $\omega_i$ et de polarisation p' sur l'obstacle A (respectivement B)

$\tau_A$ et $\tau_B$ sont les temps de propagation aller-retour d'une onde se réfléchissant sur les obstacles respectifs A et B.

Le système d'équations (1) peut se simplifier grâce aux remarques suivantes :

- le coefficient de réflexion d'une onde à une pulsation donnée peut être le même que celui d'une onde de même incidence et à une autre pulsation, pour peu que les deux pulsations soient suffisamment proches ;

- on peut choisir des polarisations p et p' telles que, pour des ondes arrivant avec un angle d'incidence normal, c'est-à-dire perpendiculairement à la surface plane A, le coefficient de réflexion sur cette surface soit le même pour ces deux polarisations. Les autres obstacles n'étant pas éclairés selon la même incidence que la surface, le coefficient de réflexion sur ces obstacles sera quant à lui différent pour ces deux polarisations. Pour satisfaire cette condition, les polarisations sont choisies préférentiellement orthogonales.

Les deux remarques précédentes se traduisent par les équations suivantes :

$$\forall\ i \in [1,3],\ A_{ip} = A_{ip'} = A$$

$$B_{ip} = B_p$$

$$B_{ip'} = B_{p'}$$

Ce qui permet de simplifier le système d'équations (1) comme il suit :

$$
\begin{cases}
Y_{1p} = A x_o\, e^{j\omega_1 \tau_A} + B_p x_o\, e^{j\omega_1 \tau_B} \\[6pt]
Y_{1p'} = A x_o\, e^{j\omega_1 \tau_A} + B_{p'}\, x_o\, e^{j\omega_1 \tau_B} \\[6pt]
Y_{2p} = A x_o\, e^{j\omega_2 \tau_A} + B_p x_o\, e^{j\omega_2 \tau_B} \\[6pt]
Y_{2p'} = A x_o\, e^{j\omega_2 \tau_A} + B_{p'}\, x_o\, e^{j\omega_2 \tau_B} \\[6pt]
Y_{3p} = A x_o\, e^{j\omega_3 \tau_A} + B_p x_o\, e^{j\omega_3 \tau_B} \\[6pt]
Y_{3p'} = A x_o\, e^{j\omega_3 \tau_A} + B_{p'}\, x_o\, e^{j\omega_3 \tau_B}
\end{cases}
$$

De ces six équations, il existe différentes combinaisons linéaires possibles permettant de calculer $\tau_A$. On peut, par exemple, former le rapport

$$k = \frac{Y_{2p} - Y_{2p'}}{Y_{1p} - Y_{1p'}} = e^{j\Delta\omega\tau_B}$$

puis le rapport

$$k' = \frac{k Y_{2p} - Y_{3p}}{k Y_{1p} - Y_{2p}} = e^{j\Delta\omega\tau_A}$$

Ayant la valeur de $\tau_A$, on peut en déduire la distance $d_A$ recherchée par la relation

$$d_A = \frac{\tau_A C}{2}$$

Remarquons que, par cette méthode, on peut calculer non seulement la distance $d_A$ qui nous intéresse, mais également la distance du radar 3 à l'obstacle parasite B.

Il est aisé de généraliser le calcul précédent à la discrimination entre une surface A et (M-1) autres obstacles. Le procédé selon l'invention prévoit en effet d'émettre alors successivement un nombre N d'ondes sensiblement planes, à des pulsations $\omega_i$ différentes, chaque onde à une pulsation $\omega_i$ donnée étant émise en outre selon deux polarisations p et p' différentes, choisies pour répondre aux conditions données précédemment, à savoir:

- des coefficients de réflexion identiques pour deux ondes de même pulsation $\omega_i$, arrivant sur la surface avec un angle d'incidence normal, l'une étant émise selon la polarisation p, l'autre selon la polarisation p';
- des coefficients de réflexion différents pour les autres obstacles.

Les signaux reçus par le radar, après détection de phase ou démodulation classique, sont alors du type

$$\begin{cases} Y_{ip} = A\,e^{j\omega_i\tau_A} + \sum_{j=1}^{M-1} B_{ijp}\,e^{j\omega_i\tau_j} \\[4mm] Y_{ip'} = A\,e^{j\omega_i\tau_A} + \sum_{j=1}^{M-1} B_{ijp'}\,e^{j\omega_i\tau_j} \end{cases}$$

avec :

A, coefficient de réflexion des ondes sur la surface ;

$\tau_j$, temps de propagation aller-retour des ondes se réfléchissant sur un obstacle j différent de la surface, j étant un entier variant de 1 à M-1 ;

$B_{ijp}$ et $B_{ijp'}$, les coefficients de réflexion sur l'obstacle j des ondes de pulsation $\omega_i$ et de polarisations respectives p et p';

équations que l'on peut encore écrire sous la forme :

$$\forall\, i \in [\,1, N\,] \begin{cases} Y_{ip} = A\,x_0\,e^{j\omega_i\tau_A} + B_{ip}\,e^{j\alpha_{ip}} \\[4mm] Y_{ip'} = A\,x_0\,e^{j\omega_i\tau_A} + B_{ip'}\,e^{j\alpha_{ip'}} \end{cases}$$

où $B_{ip'}$ et $B_{ip}$ sont des coefficients réels, indépendants l'un de l'autre
et $\alpha_{ip}$ et $\alpha_{ip'}$ représentent des phases également indépendantes l'une de l'autre.

Il n'y a plus de solution analytique dès que l'on considère plus de deux obstacles. Il faut alors faire appel à des méthodes itératives de calcul numérique ou à une estimation de $\tau_A$ réalisée de la façon suivante :

En effectuant la somme à l'infini des coefficients d'intercorrélation entre deux signaux $Y_{ip}$ et $Y_{(i+1)p'}$ à deux pulsations successives $\omega_i$ et $\omega_{i+1}$ et à polarisations différentes, et en tenant compte de la propriété d'indépendance entre les coefficients $B_{ip'}$ et $B_{ip}$ d'une part, et les phases $\alpha_{ip}$ et $\alpha_{ip'}$ d'autre part, on peut démontrer l'égalité suivante :

$$\lim_{N \to \infty} \left[ \sum_{i=1}^{N} Y_{(i+1)p} Y^{*}_{ip'} \right] = A(N+1) e^{j\Delta\omega\tau_A}$$

d'où l'on déduit un estimateur du temps de propagation $\tau_A$ pour N fixé, suivant la relation :

$$\hat{\tau}_A = \frac{1}{\Delta\omega} \, \text{Arctg} \left[ \frac{\text{Im}\left( \sum_{i=1}^{N} Y_{(i+1)p} Y^{*}_{ip'} \right)}{\text{Re}\left( \sum_{i=1}^{N} Y_{(i+1)p} Y^{*}_{ip'} \right)} \right]$$

et une estimation $\hat{d}_A$ de la distance correspondante :

$$\hat{d}_A = \frac{C}{2\Delta\omega} \, \hat{\tau}_A$$

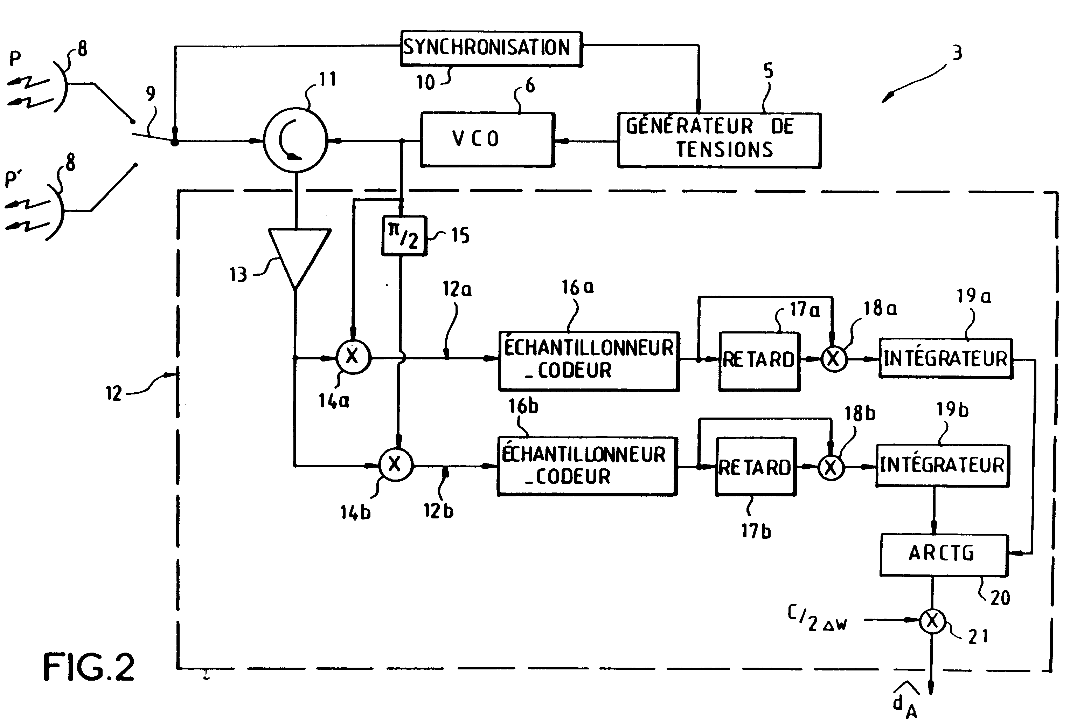

La figure 2 montre un exemple de réalisation d'un radar permettant de mettre en oeuvre l'application précédente, et permettant plus généralement la mesure du niveau d'un liquide par rapport à un niveau de référence donné, sur lequel est positionné le radar.

Comme nous l'avons dit précédemment, le radar est positionné à la verticale de la surface de liquide, de façon à ce que sa direction de visée soit orthogonale à cette surface.

En référence à la figure 2, le radar possède, selon l'invention, des premiers moyens pour émettre successivement les ondes aux pulsations $\omega_i$ , et selon deux polarisations p et p', et des seconds moyens de calcul de la distance $d_A$ séparant le radar du niveau du liquide.

Dans le mode de réalisation non limitatif représenté sur la figure 2, ces premiers moyens d'émission comportent tout d'abord un générateur de tensions 5 fournissant à un oscillateur commandé en tension (VCO) 6, N valeurs successives de tensions $V_i$ nécessaires pour l'obtention des ondes aux N pulsations $\omega_i$.

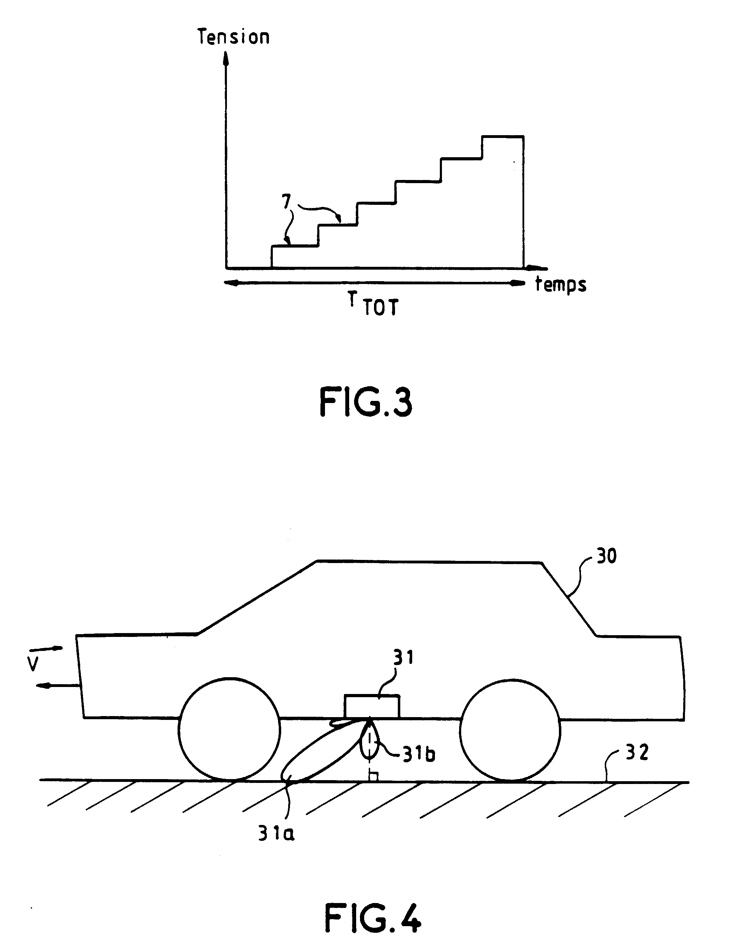

La caractéristique d'un tel générateur de tension peut par exemple avoir l'allure de marches d'escalier à palier 7 préférentiellement constant représentée sur la figure 3 de façon à obtenir sur une durée totale $T_{TOT}$ d'émission du radar, des pulsations $\omega_i$ croissantes et espacées d'un pas $\Delta\omega$ constant sur une bande de fréquences $\Delta F$ donnée.

Chaque onde de pulsation $\omega_i$ issue du VCO 6 est alors émise en polarisation p, puis en polarisation p' par l'intermédiaire de deux antennes 8 émettant chacune dans une des deux polarisations, et d'un commutateur 9 commandé par une synchronisation 10, et venant commuter sur l'une ou l'autre des antennes 8. La synchronisation 10 est réglée de façon à avoir le temps, pour une même pulsation $\omega_i$, de commuter sur les deux antennes.

Les mêmes antennes 8 reçoivent, dans leurs polarisations respectives, les ondes réfléchies qu'elles transmettent successivement, via un circulateur 11 vers une chaîne de réception 12 comportant classiquement un amplificateur 13, de préférence à faible bruit, et deux voies de traitement parallèles 12a et 12b des ondes reçues. Les deux voies de traitement effectuent une démodulation, l'une en phase, l'autre en quadrature de phase, en mélangeant, au moyen de mélangeurs 14a, 14b, les ondes reçues aux pulsations $\omega_i$ avec les ondes de mêmes pulsations $\omega_i$ issues directement du VCO 6, ou déphasés de $\pi/2$ par un déphaseur 15. Les signaux issus des mélangeurs 14a, 14b vont alors subir un traitement numérique similaire sur les deux voies. Ils vont tout d'abord être fournis à des échantillonneurs-codeurs 16a, 16b délivrant des échantillons à une période d'échantillonnage T choisie pour avoir un échantillon représentatif de chaque pulsation $\omega_i$. Chaque échantillon relatif à une pulsation $\omega_i$ est ensuite mémorisé dans des registres 17a, 17b pendant une durée déterminée de façon à pouvoir multiplier cet échantillon, par l'intermédiaire de multiplicateurs 18a, 18b, avec un échantillon de pulsation $\omega_{i+1}$ et de polarisation différente. Les résultats de ces multiplications sont ensuite fournis à des intégrateurs 19a, 19b intégrant sur la durée totale $T_{TOT}$ d'émission du radar, et délivrant une estimation respective de Arcsin $\Delta\omega\tau_A$ et Arccos $\Delta\omega\tau_A$. Un module 20 effectue le rapport de ces deux estimations, rapport qu'il ne reste plus qu'à multiplier par la valeur connue $C/_{2\Delta\omega}$ par l'intermédiaire d'un module de multiplication 21 pour obtenir une estimation de la distance $\hat{d}_A$.

Le résultat précédent peut bien évidemment être obtenu différemment : on peut par exemple envisager d'émettre simultanément dans les deux polarisations, et de traiter en parallèle les signaux reçus dans les différentes polarisations.

La figure 4 illustre une application du procédé selon l'invention à l'élimination d'échos parasites issus par un radar cinémomètre Doppler.

Sur cette figure, on a représenté un véhicule routier 30 équipé d'un radar cinémomètre 31, placé par exemple sous le châssis du véhicule 30, de telle sorte que son lobe principal 31a et par conséquent sa direction de visée, soient inclinés par rapport à la verticale. La mesure de vitesse effectuée de manière connue par ce radar 30, est entachée d'une erreur provenant de l'écho parasite reçu par les lobes secondaires 31b à la verticale du véhicule 30, c'est-à-dire l'écho parasite provenant du sol 32. Le sol ayant localement une surface sensiblement plane, et, sous réserve d'une faible rugosité de cette surface, l'écho provenant de la verticale est indépendant de la polarisation utilisée, tant que le champ électrique de l'onde reste parallèle à la surface de la route. Pour éliminer cet écho parasite, il faut donc équiper le radar de moyens pour émettre successivement des ondes dans une pluralité de pulsations $\omega_i$, chaque onde à une pulsation $\omega_i$ donnée étant émise selon deux polarisations p et p' conformément au procédé selon l'invention, et de moyens d'élimination des échos parasites provenant du sol, qui effectuent par exemple la différence de deux signaux démodulés.

Une autre application du procédé selon l'invention concerne l'élimination d'échos parasites pour un radar de contrôle du trafic de véhicule, lequel radar est situé sur la route au-dessus de la circulation, par exemple sous la voûte d'un tunnel. Là encore, les échos provenant du sol ou des toits de véhicules et captés par les lobes secondaires, sont gênants pour les mesures. Le procédé selon l'invention permet de les éliminer comme dans l'application précédente.

L'intérêt principal de l'invention réside dans le fait qu'il est possible de réaliser des mesures beaucoup plus précises, sans s'imposer de contraintes violentes sur l'allure du diagramme d'émission, et notamment sur le niveau des lobes secondaires. De plus, on peut, dans le cas d'un petit nombre d'obstacles, obtenir une très bonne précision en distance en utilisant une bande d'émission étroite. Le procédé de discrimination est également indépendant de la forme d'ondes utilisée, lesquelles peuvent être continues ou émises sous forme d'impulsions. Il convient cependant, lorsque l'on veut mesurer une distance, de prendre des précautions nécessaires pour ne pas avoir d'ambiguïtés en distance :

Dans le cas de l'émission d'ondes continues, la mesure de la distance sera non ambiguë si la différence de phases $(\varphi_{i+1} - \varphi_i)$ de deux ondes émises successivement aux pulsations $\omega_i$ et $\omega_{i+1}$ est inférieure à $2\pi$.

Dans le cas d'ondes émises sous forme d'impulsions, la condition à respecter est que la durée d'une récurrence radar soit supérieure en temps aller-retour maximum correspondant à l'obstacle le plus éloigné dont on veut mesurer la distance.

**Revendications**

1.  Procédé de discrimination d'un obstacle (A) possèdant une surface sensiblement plane parmi un nombre M d'obstacles, à l'aide d'un radar (3) ayant un diagramme d'émission présentant un lobe principal (4a) et des lobes secondaires (4b), les ondes sensiblement planes émises par le radar avec une direction de propagation qui coïncide avec la direction de visée du lobe principal étant telles qu'elles arrivent sur la surface avec un angle d'incidence normal, ledit procédé étant caractérisé en ce qu'il consiste à :

    -   émettre successivement, à partir du radar (3), un nombre N supérieur à 2 d'ondes sensiblement planes, de pulsations distinctes $\omega_i$, l'entier i variant de 1 à N, les N pulsations $\omega_i$ étant choisies dans une bande de fréquence $\Delta F$ déterminée de façon à ce que les coefficients de réflexion obtenus sur un même obstacle pour ces différentes pulsations soient identiques quelle que soit la pulsation, chaque onde à une pulsation $\omega_i$ donnée étant émise en outre selon deux polarisations p et p' orthogonales de telle sorte que seuls les coefficients de réflexion obtenus pour chacune de ces polarisations, pour des ondes de pulsation donnée arrivant sur ladite surface de l'obstacle à discriminer avec un angle d'incidence normal, soient égaux;
    -   démoduler des signaux de réponse $r_{ip}(t)$ et $r_{ip'}(t)$ reçus par le radar en mélangeant les ondes reçues aux différentes pulsations $\omega_i$ avec les ondes émises de mêmes pulsations $\omega_i$ dans les polarisations respectives p et p', de façon à obtenir des signaux $(Y_{ip}, Y_{ip'})$ indépendants du temps ;
    -   combiner les signaux démodulés de façon à discriminer ledit obstacle (A) et à calculer la distance $d_A$ séparant le radar de la surface, ladite étape de calcul de la distance $d_A$ consistant à calculer le temps $\tau_A$ de propagation aller-retour des ondes se réfléchissant sur la surface par résolution du système de 2N équations suivant, obtenu par la démodulation :

$$\begin{cases} Y_{ip} = Ae^{j\omega_i \tau_A} + \sum_{j=1}^{M-1} B_{ijp} e^{j\omega_i \tau_j} \\ Y_{ip'} = Ae^{j\omega_i \tau_A} + \sum_{j=1}^{M-1} B_{ijp'} e^{j\omega_i \tau_j} \end{cases}$$

avec :

A, coefficient de réflexion des ondes sur la surface ;

$\tau_j$, temps de propagation aller-retour des ondes se réfléchissant sur un obstacle j différent de la surface, j étant un entier variant de 1 à M-1 ;

$B_{ijp}$ et $B_{ijp'}$, les coefficients de réflexion sur l'obstacle j des ondes de pulsation $\omega_i$ et de polarisations respectives p et p';

et à en déduire la distance $d_A$.

2. Procédé de discrimination selon la revendication 1, caractérisé en ce que les pulsations $\omega_i$ sont séparées d'un pas constant $\Delta\omega$ et en ce que l'étape de calcul de la distance $d_A$ consiste à :

- estimer le temps $\tau_A$ de propagation aller-retour des ondes se réfléchissant sur la surface en formant l'équation :

$$\hat{\tau}_A = \frac{1}{\Delta\omega} \mathrm{Arctg} \left[ \frac{\mathrm{Im}\left( \sum_{i=1}^{N} Y_{(i+1)p} Y^*_{ip'} \right)}{\mathrm{Re}\left( \sum_{i=1}^{N} Y_{(i+1)p} Y^*_{ip'} \right)} \right]$$

- en déduire une estimation $\hat{d}_A$ de la distance.

3. Procédé de discrimination d'un obstacle (A) possédant une surface sensiblement plane parmi un nombre M d'échos parasites de cet obstacle, à l'aide d'un radar (31) ayant un diagramme d'émission présentant un lobe principal (31a) et des lobes secondaires (31b), les ondes émises par le radar qui arrivent sur la surface avec un angle d'incidence normal ayant une direction de propagation différente de la direction du lobe principal, créant ainsi des échos parasites, ledit procédé étant caractérisé en ce qu'il consiste à :

- émettre successivement, à partir du radar (3), un nombre N supérieur à 2 d'ondes sensiblement planes, de pulsations distinctes $\omega_i$, l'entier i variant de 1 à N, les N pulsations $\omega_i$ étant choisies dans une bande de fréquence $\Delta F$ déterminée de façon à ce que les coefficients de réflexion obtenus sur un même obstacle pour ces différentes pulsations soient identiques quelle que soit la pulsation, chaque onde à une pulsation $\omega_i$ donnée étant émise en outre selon deux polarisations p et p' orthogonales de telle sorte que seuls les coefficients de réflexion obtenus pour chacune de ces polarisations, pour des ondes de pulsation donnée arrivant sur ladite surface de l'obstacle à discriminer avec un angle d'incidence normal, soient égaux;
- démoduler des signaux de réponse $r_{ip}(t)$ et $r_{ip'}(t)$ reçus par le radar en mélangeant les ondes reçues aux différentes pulsations $\omega_i$ avec les ondes émises de mêmes pulsations $\omega_i$ dans les polarisations respectives p et p', de façon à obtenir des signaux $(Y_{ip}, Y_{ip'})$ indépendants du temps ;
- combiner les signaux démodulés de façon à discriminer ledit obstacle (A) et à éliminer lesdits échos parasites, cette étape d'élimination des échos parasites consistant à former la différence des signaux démodulés $(Y_{ip}, Y_{ip'})$.

4. Radar mettant en oeuvre le procédé selon les revendications 1 ou 2 pour la mesure du niveau d'un liquide par rapport à un niveau de référence donné sur lequel est positionné le radar (3), caractérisé en ce qu'il possède :

- des premiers moyens pour émettre successivement les ondes aux pulsations $\omega_i$, chaque onde à une pulsation

$\omega_i$ donnée étant émise selon les deux polarisations p et p';
- des seconds moyens de démodulation des signaux de réponse $r_{ip}(t)$ et $r_{ip'}(t)$ reçus par le radar par mélange des ondes reçues aux différentes pulsations $\omega_i$ avec les ondes émises de mêmes pulsations $\omega_i$ dans les polarisations p et p', de façon à obtenir des signaux ($Y_{ip}$, $Y_{ip'}$) indépendants du temps ;
- des troisièmes moyens de calcul de la distance $d_A$ séparant le radar du niveau du liquide constituant la surface.

5. Radar selon la revendication 4, caractérisé en ce que les premiers moyens sont constitués :

- d'un générateur de tensions (5) fournissant à un oscillateur commandé en tension (6) N valeurs successives de tensions $V_i$ pour que l'oscillateur (6) délivre des ondes aux N pulsations $\omega_i$ pendant une durée totale d'émission $T_{TOT}$ ;
- de deux antennes (8) de polarisations respectives p et p' émettant alternativement les ondes issues de l'oscillateur (6) par l'intermédiaire d'un commutateur (9) commandé par une synchronisation (10);

et en ce que lesdits seconds moyens sont constitués :

- de moyens d'amplification (13) des ondes réfléchies reçues, dans leurs polarisations respectives, par lesdites antennes (8); et
- des moyens de démodulation (14a, 14b, 15) pour effectuer, dans deux voies (12a, 12b), une démodulation en phase et en quadrature de phase en mélangeant les ondes reçues aux pulsations $\omega_i$ avec les ondes de mêmes pulsations issues dudit oscillateur commandé en tension (6).

6. Radar selon la revendication 5, caractérisé en ce que les troisièmes moyens comprennent, à la suite de chacune des voies des seconds moyens, en série un échantillonneur-codeur (16a, 16b) fournissant des échantillons à un registre (17a, 17b), un multiplicateur (18a, 18b) recevant les échantillons provenant, d'une part, de l'échantillonneur-codeur (16a, 16b) et, d'autre part, du registre (17a, 17b), un intégrateur (19a, 19b) pour intégrer les sorties du multiplicateur (18a, 18b) sur la durée totale d'émission, les sorties des intégrateurs étant alors fournies à un module (20) qui en effectue le rapport, puis à un module de multiplication (21) effectuant la multiplication du rapport par $C/_{2\omega}$, et délivrant une estimation de la distance $d_A$.

7. Radar cinémomètre Doppler mettant en oeuvre le procédé selon la revendication 3 pour l'élimination d'échos parasites reçus, le radar étant placé sur un véhicule routier avec son lobe principal (31a) incliné par rapport à la verticale, caractérisé en ce qu'il comprend :

- des moyens pour émettre successivement les ondes aux pulsations $\omega_i$, chaque onde à une pulsation $\omega_i$ donnée étant émise selon les deux polarisations p et p';
- des moyens de démodulation des signaux de réponse $r_{ip}(t)$ et $r_{ip'}(t)$ reçus par le radar par mélange des ondes reçues aux différentes pulsations avec les ondes émises de mêmes pulsations $\omega_i$ dans les polarisations p et p', de façon à obtenir des signaux ($Y_{ip}$, $Y_{ip'}$) indépendants du temps ;
- des moyens d'élimination des échos parasites provenant du sol par formation de la différence des signaux démodulés ($Y_{ip}$, $Y_{ip'}$).

8. Radar de contrôle du trafic de véhicules mettant en oeuvre le procédé selon la revendication 3 pour l'élimination d'échos parasites reçus, caractérisé en ce que le radar est fixe au-dessus des véhicules, son lobe principal étant incliné par rapport à la verticale, et en ce qu'il comprend :

- des moyens pour émettre successivement les ondes aux pulsations $\omega_i$, chaque onde à une pulsation $\omega_i$ donnée étant émise selon les deux polarisations p et p';
- des moyens de démodulation des signaux de réponse $r_{ip}(t)$ et $r_{ip'}(t)$ reçus par le radar par mélange des ondes reçues aux différentes pulsations avec les ondes émises de mêmes pulsations $\omega_i$ dans les polarisations p et p', de façon à obtenir des signaux ($Y_{ip}$, $Y_{ip'}$) indépendants du temps ;
- des moyens d'élimination des échos parasites provenant du sol par formation de la différence des signaux démodulés ($Y_{ip}$, $Y_{ip'}$).

**Patentansprüche**

1. Verfahren zur Diskriminierung eines Ziels (A) mit im wesentlichen ebener Oberfläche bezüglich von M anderen Zielen mithilfe eines Radargeräts (3), dessen Sendediagramm eine Hauptkeule (4a) und Nebenkeulen (4b) aufweist, wobei die im wesentlichen ebenen Wellen vom Radargerät in einer mit der Richtung der Hauptkeule zusammenfallenden Ausbreitungsrichtung ausgesendet werden, sodaß diese Wellen senkrecht auf dies Oberfläche auftreffen, dadurch gekennzeichnet, daß das Verfahren darin besteht,

- nacheinander von dem Radargerät N>2 im wesentlichen ebene Wellen unterschiedlicher Kreisfrequenzen $\omega_i$ auszusenden, wobei i von 1 bis N variiert und die N Frequenzen in einem bestimmten Frequenzband $\Delta F$ ausgewählt werden, sodaß die Reflexionskoeffizienten an einem bestimmten Ziel für diese verschiedenen Frequenzen unabhängig von der Frequenz identisch sind und wobei jede Welle mit einer gegebenen Kreisfrequenz $\omega_i$ außerdem gemäß zwei zueinander senkrechten Polarisationen p und p' ausgesendet werden, sodaß nur diejenigen für jede dieser Polarisationen erhaltenen Reflexionskoeffizienten von Wellen einer gegebenen Frequenz gleich sind, die auf die Oberfläche des zu diskriminierenden Ziels senkrecht auftreffen,
- im Radargerät empfangene Echosignale ($r_{ip}(t)$ und $r_{ip'}(t)$) zu demodulieren, indem die mit den verschiedenen Kreisfrequenzen $\omega_i$ empfangenen Wellen mit den mit den gleichen Frequenzen $\omega_i$ ausgesendeten Wellen in den jeweiligen Polarisationen p und p' gemischt werden, sodaß sich zeitunabhängige Signale ($Y_{ip}$, $Y_{ip'}$) ergeben,
- die demodulierten Signale so zu kombinieren, daß das Ziel (A) diskriminiert wird, und den Abstand $d_A$ zwischen dem Radargerät und der Oberfläche zu berechnen, wobei der Schritt der Berechnung des Abstands $d_A$ darin besteht, die Signallaufzeit $\tau_A$ in beiden Richtungen für die an der Fläche reflektierten Wellen durch Auflösung des bei der Modulation erhaltenen nachfolgenden Systems von 2N Gleichungen zu berechnen:

$$\begin{cases} Y_{ip} = A e^{j\omega_i \tau_A} + \sum_{j=1}^{M-1} B_{ijp} e^{j\omega_i \tau_j} \\ Y_{ip'} = A e^{j\omega_i \tau_A} + \sum_{j=1}^{M-1} B_{ijp'} e^{j\omega_i \tau_j} \end{cases}$$

wobei gilt: A ist der Reflexionskoeffizient der Wellen an der Fläche; $\tau_j$ ist die Laufzeit der an einem anderen Ziel als der Fläche reflektierten Wellen, wobei j eine ganze Zahl ist, die von 1 bis M-1 variiert; $B_{ijp}$ und $B_{ijp'}$ sind die Reflexionskoeffizienten am Ziel j für die Wellen mit der Kreisfrequenz $\omega_i$ und die Polarisation p beziehungsweise p'; woraus dann der Abstand $d_A$ abgeleitet wird.

2. Verfahren zur Diskriminierung nach Anspruch 1, dadurch gekennzeichnet, daß die Kreisfrequenzen $\omega_i$ sich um konstante Beträge $\Delta\omega$ voneinander unterscheiden und daß der Schritt der Berechnung des Abstands $d_A$ darin besteht, die Laufzeit $\tau_A$ der an der Fläche reflektierten Wellen in beiden Richtungen mithilfe folgender Gleichung zu schätzen:

$$\hat{\tau}_A = \frac{1}{\Delta\omega} \text{Arctg} \left[ \frac{\text{Im}\left(\sum_{i=1}^{N} Y_{(i+1)p} Y^*_{ip'}\right)}{\text{Re}\left(\sum_{i=1}^{N} Y_{(i+1)p} Y^*_{ip'}\right)} \right]$$

woraus dann ein Schätzwert $d_A$ des Abstands abgeleitet wird.

3. Verfahren zur Diskriminierung eines Ziels (A) mit im wesentlichen ebener Oberfläche bezüglich von M Störechos dieser Ziele mithilfe eines Radargeräts (31), dessen Sendediagramm eine Hauptkeule (31a) und Nebenkeulen (31b) aufweist, wobei die von dem Radargerät ausgesendeten und auf die Oberfläche senkrecht auftreffenden Wellen eine andere Ausbreitungsrichtung als die der Hauptkeule besitzen und Störechos erzeugen, dadurch gekennzeichnet, daß das Verfahren darin besteht,

- nacheinander vom Radargerät (3) N>2 im wesentlichen ebene Wellen unterschiedlicher Kreisfrequenzen $\omega_i$ auszusenden, wobei i eine ganze Zahl ist, die zwischen 1 und N variiert und die N Kreisfrequenzen $\omega_i$ in einem bestimmten Frequenzband $\Delta F$ so gewählt sind, daß die an einem gegebenen Ziel für diese verschiedenen Frequenzen erhaltenen Reflexionskoeffizienten unabhängig von der Frequenz gleich sind, und wobei eine Welle einer gegebenen Kreisfrequenz $\omega_i$ außerdem gemäß zwei zueinander orthogonalen Polarisationen p und p' so ausgesendet werden, daß nur die für jede dieser Polarisationen erhaltenen Reflexionskoeffizienten für Wellen einer gegebenen Frequenz gleich sind, die auf die Oberfläche des zu diskriminierenden Ziels senkrecht auftreffen,

- vom Radargerät empfangene Echosignale $r_{ip}(t)$ und $r_{ip'}(t)$ zu modulieren, indem die mit den verschiedenen Kreisfrequenzen $\omega_i$ empfangenen Wellen mit den ausgesendeten Wellen gleicher Frequenz $\omega_i$ in der Polarisation p beziehungsweise p' gemischt werden, woraus von der Zeit unabhängige Signale ($Y_{ip}$, $Y_{ip'}$) erhalten werden,
- die demodulierten Signale so zu kombinieren, daß das Ziel (A) diskriminiert wird und die Störechos eliminiert werden, wobei dieser Schritt der Eliminierung der Störechos darin besteht, die Differenz der demodulierten Signale ($Y_{ip}$, $Y_{ip'}$) zu bilden.

4. Radargerät zur Durchführung des Verfahrens nach Anspruch 2 oder 3 zur Messung des Pegels einer Flüssigkeit bezüglich einer gegebenen Bezugshöhe, in der sich das Radargerät befindet, dadurch gekennzeichnet, daß es aufweist:

- erste Mittel zum Aussenden der Wellen mit den Kreisfrequenzen $\omega_i$ nacheinander, wobei jede Welle einer gegebenen Kreisfrequenz $\omega_i$ in zwei Polarisationen p und p' ausgesendet wird,
- zweite Mittel zur Demodulation der von dem Radargerät empfangen Echosignale $r_{ip}(t)$ und $r_{ip'}(t)$ durch Mischung der bei den verschiedenen Kreisfrequenzen $\omega_i$ empfangenen Wellen mit den bei den gleichen Frequenzen $\omega_i$ mit der Polarisation p beziehungsweise p' ausgesendeten Wellen, sodaß sich von der Zeit unabhängige Signale ($Y_{ip}$, $Y_{ip'}$) ergeben,
- und dritte Mittel zur Berechnung des Abstands $d_A$ zwischen dem Radargerät und dem Pegel der Flüssigkeit, der diese Oberfläche bildet.

5. Radargerät nach Anspruch 4, dadurch gekennzeichnet,
daß die ersten Mittel von

- einem Spannungsgenerator (5), der an einen spannungsgesteuerten Oszillator (6) nacheinander N Spannungswerte $V_i$ liefert, sodaß der Oszillator (6) Wellen mit N Kreisfrequenzen $\omega_i$ während einer Gesamtsendedauer $T_{TOT}$ liefert,
- und zwei Antennen (8) mit einer Polarisation p beziehungsweise p' gebildet werden, die abwechselnd die von dem Oszillator (6) kommenden Wellen über einen von einer Synchronisationsschaltung (10) gesteuerten Schalter (9) aussenden,

während die zweiten Mittel von

- Verstärkungsmitteln (13) für die in ihrer jeweiligen Polarisation von den Antennen (8) empfangenen Echowellen,
- und Demodulationsmitteln (14a, 14b, 15) gebildet werden, um in zwei Kanälen (12a, 12b) eine Demodulation in Phase beziehungsweise in Phasenquadratur durch Mischung der mit den Kreisfrequenzen $\omega_i$ empfangenen Wellen mit den Wellen der gleichen Frequenz durchzuführen, die der spannungsgesteuerte Oszillator (6) liefert.

6. Radargerät nach Anspruch 5, dadurch gekennzeichnet, daß die dritten Mittel hinter jedem der Kanäle der zweiten Mittel in Reihe ein Tast- und Kodierglied (16a, 16b), das Tastproben an ein Register (17a, 17b) liefert, ein Multiplizierglied (18a, 18b), das die einerseits von dem Tast- und Kodierglied (16a, 16b) und andrerseits vom Register (17a, 17b) kommenden Tastproben empfängt, und ein Integrierglied (19a, 19b) aufweisen, das die Ausgangswerte des Multiplizierglieds über die gesamte Sendedauer hinweg integriert, wobei die Ausgangssignale der Integrierglieder an einen Modul (20), der das Verhältnis bildet, und schließlich an einen Multipliziermodul (21) geliefert werden, der dieses Verhältnis mit $C/2\omega$ multipliziert und einen Schätzwert für den Abstand $d_A$ liefert.

7. Geschwindigkeits-Dopplerradar zur Durchführung des Verfahrens nach Anspruch 3 und zur Eliminierung von empfangenen Störechos, wobei das Radargerät an einem Straßenfahrzeug montiert ist und eine bezüglich der Vertikalen geneigte Hauptkeule (31a) besitzt, dadurch gekennzeichnet, daß es aufweist:

- Mittel zum Aussenden der Wellen nacheinander mit den Kreisfrequenzen $\omega_i$, wobei jede Welle einer gegebe-

nen Kreisfrequenz $\omega_i$ gemäß zwei Polarisationen p und p' ausgesendet wird,

- Demodulationsmittel für die vom Radargerät empfangenen Echosignale $r_{ip}(t)$ und $r_{ip'}(t)$ durch Mischung der mit den verschiedenen Kreisfrequenzen empfangenen Wellen mit den ausgesendeten Wellen gleicher Kreisfrequenzen $\omega_i$ und mit den Polarisationen p und p', sodaß von der Zeit unabhängige Signale ($Y_{ip}$, $Y_{ip'}$) entstehen,
- und Mittel zur Eliminierung der Störechos, die vom Boden kommen, indem die Differenz der demodulierten Signale ($Y_{ip}$, $Y_{ip'}$) gebildet wird.

8.  Radargerät zur Straßenverkehrskontrolle, zur Durchführung des Verfahrens nach Anspruch 3 und zur Eliminierung von empfangenen Störechos, dadurch gekennzeichnet, daß das Radargerät oberhalb der Fahrzeuge montiert ist und eine bezüglich der Vertikalen geneigte Hauptkeule besitzt, und daß es aufweist:

- Mittel zum Aussenden der Wellen nacheinander mit den Kreisfrequenzen $\omega_i$, wobei jede Welle einer gegebenen Kreisfrequenz $\omega_i$ gemäß zwei Polarisationen p und p' ausgesendet wird,
- Demodulationsmittel für die vom Radargerät empfangenen Echosignale $r_{ip}(t)$ und $r_{ip'}(t)$ durch Mischung der mit den verschiedenen Kreisfrequenzen empfangenen Wellen mit den ausgesendeten Wellen gleicher Kreisfrequenzen $\omega_i$ und mit den Polarisationen p und p', sodaß von der Zeit unabhängige Signale ($Y_{ip}$, $Y_{ip'}$) entstehen,
- und Mittel zur Eliminierung der Störechos, die vom Boden kommen, indem die Differenz der demodulierten Signale ($Y_{ip}$, $Y_{ip'}$) gebildet wird.

## Claims

1.  Method for discriminating an obstacle (A) possessing a substantially plane surface from among a number M of obstacles, with the aid of a radar (3) having a transmission pattern exhibiting a main lobe (4a) and side lobes (4b), the substantially plane waves transmitted by the radar with a direction of propagation which coincides with the direction of aim of the main lobe being such that they arrive at the surface at a normal angle of incidence, the said method being characterized in that it consists in:

- transmitting in succession, from the radar (3), a number N greater than 2 of substantially plane waves, with distinct angular frequencies $\omega_i$, the integer i varying from 1 to N, the N angular frequencies $\omega_i$ being chosen in a frequency band $\Delta F$ determined in such a way that the reflection coefficients obtained with regard to one and the same obstacle for these various angular frequencies are identical whatever the angular frequency, each wave at a given angular frequency $\omega_i$ being transmitted moreover in two orthogonal polarizations p and p' in such a way that only the reflection coefficients obtained for each of these polarizations, for waves of given angular frequency arriving at the said surface of the obstacle to be discriminated at a normal angle of incidence, are equal;
- demodulating response signals $r_{ip}(t)$ and $r_{ip'}(t)$ received by the radar by mixing the waves received at the various angular frequencies $\omega_i$ with the transmitted waves of like angular frequencies $\omega_i$ in the respective polarizations p and p', in such a way as to obtain time-independent signals ($Y_{ip}$, $Y_{ip'}$);
- combining the demodulated signals in such a way as to discriminate the said obstacle (A) and calculating the distance $d_A$ separating the radar from the surface, the said step of calculating the distance $d_A$ consisting in calculating the to-and-fro propagation time $\tau_A$ of the waves being reflected on the surface by solving the following system of 2N equations, obtained through the demodulation:

$$\begin{cases} Y_{ip} = A\, e^{j\omega_i \tau_A} + \sum_{j=1}^{M-1} B_{ijp}\, e^{j\omega_i \tau_j} \\[3em] Y_{ip'} = A\, e^{j\omega_i \tau_A} + \sum_{j=1}^{M-1} B_{ijp'}\, e^{j\omega_i \tau_j} \end{cases}$$

with:

A, coefficient of reflection of the waves on the surface;

$\tau_j$, to-and-fro propagation time of the waves being reflected on an obstacle j different from the surface, j being an integer varying from 1 to M-1;

$B_{ijp}$ and $B_{ijp'}$, the coefficients of reflection on the obstacle j of the waves of angular frequency $\omega_i$ and of respective polarizations p and p';

and in deducing the distance $d_A$ therefrom.

2. Method of discriminating according to Claim 1, characterized in that the angular frequencies $\omega_i$ are separated by a constant spacing $\Delta\omega$ and in that the step of calculating the distance $d_A$ consists of:

- estimating the to-and-fro propagation time $\tau_A$ of the waves being reflected on the surface by forming the equation:

$$\hat{\tau}_A = \frac{1}{\Delta\omega} \text{Arctg} \left[ \frac{\text{Im}\left( \sum_{i=1}^{N} Y_{(i+1)p} Y^*_{ip'} \right)}{\text{Re}\left( \sum_{i=1}^{N} Y_{(i+1)p} Y^*_{ip'} \right)} \right]$$

- in deducing an estimate $d_A$ of the distance therefrom.

3. Method for discriminating an obstacle (A) possessing a substantially plane surface from among a number M of parasitic echoes of this obstacle, with the aid of a radar (31) having a transmission pattern exhibiting a main lobe (31a) and side lobes (31b), the waves transmitted by the radar arriving at the surface at a normal angle of incidence having a direction of propagation which differs from the direction of the main lobe thus creating parasitic echos, the said method being characterized in that it consists in:

- transmitting in succession, from the radar (3), a number N greater than 2 of substantially plane waves, with distinct angular frequencies $\omega_i$, the integer i varying from 1 to N, the N angular frequencies $\omega_i$ being chosen in a frequency band $\Delta F$ determined in such a way that the reflection coefficients obtained with regard to one and the same obstacle for these various angular frequencies are identical whatever the angular frequency, each wave at a given angular frequency $\omega_i$ being transmitted moreover in two orthogonal polarizations p and p' in such a way that only the reflection coefficients obtained for each of these polarizations, for waves of given angular frequency arriving at the said surface of the obstacle to be discriminated at a normal angle of incidence, are equal;
- demodulating response signals $r_{ip}(t)$ and $r_{ip'}(t)$ received by the radar by mixing the waves received at the various angular frequencies $\omega_i$ with the transmitted waves of like angular frequencies $\omega_i$ in the respective polarizations p and p', in such a way as to obtain time-independent signals ($Y_{ip}$, $Y_{ip'}$);
- combining the demodulated signals in such a way as to discriminate the said obstacle (A) and in eliminating the said parasitic echoes, this step of eliminating the parasitic echoes consisting in forming the difference of the demodulated signals ($Y_{ip}$, $Y_{ip'}$).

4. Radar implementing the method according to Claims 1 or 2 for measuring the level of a liquid with respect to a given reference level on which the radar (3) is positioned, characterized in that it possesses:

- first means for transmitting in succession the waves with angular frequencies $\omega_i$, each wave at a given angular frequency $\omega_i$ being transmitted in the two polarizations p and p';
- second means of demodulating response signals $r_{ip}(t)$ and $r_{ip'}(t)$ received by the radar by mixing the waves received at the various angular frequencies $\omega_i$ with the transmitted waves of like angular frequencies $\omega_i$ in the polarizations p and p', in such a way as to obtain time-independent signals ($Y_{ip}$, $Y_{ip'}$);

- third means of calculating the distance $d_A$ separating the radar from the level of the liquid constituting the surface.

**5.** Radar according to Claim 4, characterized in that the first means consist;

- of a voltage generator (5) providing a voltage-controlled oscillator (6) with N successive values of voltages $V_i$ so that the oscillator (6) delivers waves at the N angular frequencies $\omega_i$ for a total duration of transmission $T_{TOT}$;
- of two antennae (8) with respective polarizations p and p' alternately transmitting the waves coming from the oscillator (6) by way of a changeover switch (9) controlled by a synchronization (10);

and in that the said second means consist:

- of means of amplification (13) of the reflected waves received, in their respective polarizations, by the said antennae (8); and
- of means of demodulation (14a, 14b, 15) for carrying out, in two channels (12a, 12b), phase demodulation and phase quadrature demodulation by mixing the waves received at the angular frequencies $\omega_i$ with the waves of like angular frequencies coming from the said voltage-controlled oscillator (6).

**6.** Radar according to Claim 5, characterized in that the third means comprise, subsequent to each of the channels of the second means, in series a sample-and-code device (16a, 16b) providing samples to a register (17a, 17b), a multiplier (18a, 18b) receiving the samples originating, on the one hand, from the sample-and-code device (16a, 16b) and, on the other hand, from the register (17a, 17b), an integrator (19a, 19b) for integrating the outputs from the multiplier (18a, 18b) over the total duration of transmission, the outputs from the integrators then being provided to a module (20) which performs the ratio thereof, then to a multiplication module (21) performing the multiplication of the ratio by $C/_{2\omega}$, and delivering an estimate of the distance $d_A$.

**7.** Speed-measurement Doppler radar implementing the method according to Claim 3 for the elimination of parasitic echoes received, the radar being placed on a road vehicle with its main lobe (31a) inclined with respect to the vertical, characterized in that it comprises:

- means for transmitting in succession the waves at the angular frequencies $\omega_i$, each wave at a given angular frequency $\omega_i$ being transmitted in the two polarizations p and p';
- means of demodulating response signals $r_{ip}(t)$ and $r_{ip'}(t)$ received by the radar by mixing the waves received at the various angular frequencies with the transmitted waves of like angular frequencies $\omega_i$ in the respective polarizations p and p', in such a way as to obtain time-independent signals ($Y_{ip}$, $Y_{ip'}$);
- means of eliminating the parasitic echoes originating from the ground by forming the difference of the demodulated signals ($Y_{ip}$, $Y_{ip'}$).

**8.** Radar for monitoring vehicle traffic implementing the method according to Claim 3 for the elimination of parasitic echoes received, characterized in that the radar is fixed above the vehicles, its main lobe being inclined with respect to the vertical, and in that it comprises:

- means for transmitting in succession the waves at the angular frequencies $\omega_i$, each wave at a given angular frequency $\omega_i$ being transmitted in the two polarizations p and p';
- means of demodulating response signals $r_{ip}(t)$ and $r_{ip'}(t)$ received by the radar by mixing the waves received at the various angular frequencies $\omega_i$ with the transmitted waves of like angular frequencies $\omega_i$ in the polarizations p and p', in such a way as to obtain time-independent signals ($Y_{ip}$, $Y_{ip'}$);
- means of eliminating the parasitic echoes originating from the ground by forming the difference of the demodulated signals ($Y_{ip}$, $Y_{ip'}$).

# FIG.1

FIG.2

FIG.3

FIG.4